# EUROPÄISCHE PATENTSCHRIFT

(11) **EP 1 342 505 B1**
(45) Veröffentlichungstag und Bekanntmachung des Hinweises auf die Patenterteilung: **12.12.2007**
(21) Anmeldenummer: 03002248.7
(22) Anmeldetag: 01.02.2003
(51) Int. Cl.: B05B 5/16, B05B 15/12

(54) **Anlage zur Beschichtung von Gegenständen mit Pulver**
Assembly for the powder coating of objects
Dispositif pour le revêtement en poudre des objets

(30) Priorität: 05.03.2002 DE 10209488
(43) Veröffentlichungstag der Anmeldung: 10.09.2003
(73) Patentinhaber: EISENMANN Anlagenbau GmbH & Co. KG, 71032 Böblingen (DE)
(72) Erfinder: Hihn, Erwin, 72141 Walddorfhäslach (DE); Reichler, Jan, 78465 Konstanz (DE)
(74) Vertreter: Ostertag, Ulrich

(56) Entgegenhaltungen:
- EP-A- 1 070 546
- EP-A- 1 080 789
- WO-A-01/19529
- CH-A- 529 590
- FR-A- 2 369 878
- US-A- 3 960 323

## Beschreibung

Die Erfindung betrifft eine Anlage zur Beschichtung von Gegenständen mit einem Pulver mit
a) einer Kabine, in der die Gegenstände durch mindestens eine Applikationseinrichtung mit Pulver beaufschlagbar sind;
b) einer Wiedergewinnungseinrichtung für das Überschußpulver, das bei der Beschichtung nicht an den Gegenständen haften bleibt;
c) einem Vorratsbehälter für frisches Pulver;
d) einem Mischbehälter, dem aus der Wiedergewinnungseinrichtung Überschußpulver und aus dem Vorratsbehälter frisches Pulver zuführbar ist;
e) einer Siebmaschine, der über ein Auslaßventil des Mischbehälters Mischpulver zuführbar ist;
f) einem Applikationsbehälter, in dem gesiebtes Mischpulver zur Entnahme durch die Applikationseinrichtung zwischenspeicherbar ist;
g) einer Wägeeinrichtung, welche das Gewicht des Applikationsbehälters mißt.

Es ist bekannt, daß bei der Beschichtung von Gegenständen mit Pulver in erheblichem Maß Überschußpulver (sog. "Overspray") anfällt, welches nicht an den zu beschichtenden Gegenständen anhaftet und aus Kostengründen wiedergewonnen werden muß. Dieses wiedergewonnene Überschußpulver wird in einem Mischbehälter in einem bestimmten Verhältnis mit frischem Pulver vermischt, danach in einer Siebmaschine gesiebt und im allgemeinen einem Applikationsbehälter zugeführt, aus dem dann die Applikationseinrichtung das von ihr abgegebene Pulver entnimmt

Aus der EP 1 080 789 A1 ist eine Pulverrückgewinnungseinheit für Pulverbeschichtungsanlagen bekannt, bei welcher der Auslass eines Zyklonabscheiders mit dem Einlass der Pulverrückgewinnungseinheit verbunden wird. Das rückgewonnene Pulver wird durch ein Blendensieb geleitet und direkt danach wird Frischpulver aus einer Frischpulverzufuhr zudosiert und die Mischung in einen Zwischentrichter überführt, von wo das Pulvergemisch auf ein Ultraschallsieb gelangt. Von dort wird das Pulver in einem darunter angeordneten Fluidbehälter gesammelt, von wo es mittels Injektoren direkt zu Pulverpistolen in einer Beschichtungsanlage geleitet wird. Eine Niveausonde im Fluidbehälter wird zur Regelung der Zufuhr von Frischpulver verwendet.

Bei einer vom Markt her bekannten Anlage der eingangs genannten Art befindet sich der Applikationsbehälter sehr nahe an der Applikationseinrichtung und ist über eine verhältnismäßig lange Leitung mit der Siebmaschine verbunden. Der Applikationsbehälter wird verhältnismäßig niederfrequent vibriert, um das darin befindliche Mischpulver auch in Wandnähe strömungsfähig zu halten. Mit Hilfe einer Wägeeinrichtung wird das Gewicht der Applikationseinrichtung überwacht und die Zufuhr von Mischpulver von der Siebmaschine her eingeleitet, wenn das Füllgewicht des Applikationsbehälters unter einen bestimmten Wert abfällt. Diese Wägeeinrichtung arbeitet aus doppeltem Grund verhältnismäßig träge: Zum einen muß die Elektronik mit einer Zeitkonstante versehen sein, die lang gegenüber der Periode der Schwingungen ist, denen der Applikationsbehälter ausgesetzt ist. Zum anderen benötigt die Nachfüllung des Applikationsbehälters wegen des langen Verbindungswegs zur Siebmaschine verhältnismäßig viel Zeit und kann nicht innerhalb der verhältnismäßig kurzen, zwischen zwei Beschichtungsvorgängen liegenden Zeit zuverlässig und vollständig abgewickelt werden. Daher läßt sich auch das Gewicht bzw. die Gewichtsveränderung des Applikationsbehälters, das bzw. die von der Wägeeinrichtung ermittelt wird, nicht als zuverlässiges Maß für die momentan in der Zeiteinheit abgegebene Menge an Pulver verwenden.

Aufgabe der vorliegenden Erfindung ist es, eine Anlage der eingangs genannten Art derart auszugestalten, daß ständig in Echtzeit die Menge des von der Applikationseinrichtung abgegebenen Pulvers für jeden zu lackierenden Gegenstand eindeutig erfaßbar und dokumentierbar ist.

Diese Aufgabe wird erfindungsgemäß dadurch gelöst, daß die Siebmaschine
h) in unmittelbarer Nähe des Mischbehälters angeordnet ist;
i) gleichzeitig als Applikationsbehälter dient;
k) keinen niederfrequenten Schwingungen unterzogen wird;
1) mit einem steuerbaren Auslaßventil versehen ist.

Die. Erfindung fußt auf der Erkenntnis, daß zur Verwertung des Ausgangssignals der Wägeeinrichtung als Echtzeit-Maß für die momentan abgegebene Pulvermenge verschiedene Bedingungen erfüllt sein müssen: Erstens darf zwischen dem Auslaßventil, welches die Beschickung des Applikationsbehälters steuert, und dem Applikationsbehälter selbst, dessen Gewicht überwacht wird, kein zu großer Förderweg bestehen, der die Steuerung des Nachfüllvorgangs insgesamt zu träge machen würde. Deshalb verwendet die vorliegende Erfindung die Siebmaschine, die direkt am Mischbehälter angeordnet ist, gleichzeitig als Applikationsbehälter. Auf diese Weise wird die Zeit, die das Mischpulver vom Mischbehälter zum Applikationsbehälter benötigt, auf ein vernachlässigbares Maß verkürzt und gleichzeitig der apparative Aufwand reduziert. Zweitens muß die Siebmaschine mit einem steuerbaren Auslaßventil versehen sein, damit zu Beginn des Beschichtungsvorgangs eine definierte Menge Mischpulver in die Siebmaschine eingewogen werden kann, die zur vollständigen Beschichtung mindestens eines Gegenstands ausreicht. Drittens darf die Siebmaschine nicht so niederfrequent schwingen, daß zur Verarbeitung des elektrischen Wägesignals Zeitkonstanten benötigt werden, die vergleichbar mit den Zeiten sind, die das Mischpulver zum Durchlaufen der Strecke zur Applikationseinrichtung benötigt, insbesondere keinesfalls vergleichbar mit den Taktzeiten des Beschichtungsvorgangs in der entsprechenden Kabine.

Sind diese Bedingungen erfüllt, ist es möglich, die zeitliche Veränderung der Siebmaschine unmittelbar mit der pro Zeiteinheit entnommenen Pulvermenge zu korrelieren. Da diese Meßergebnisse in Echzeit gewonnen werden, ist ständig bekannt, welcher Gegenstand mit der gemessenen Menge an Mischpulver beaufschlagt wurde. Störungen des Beschichtungsvorgangs, die direkt während dieses Vorgangs oder auch bei der nachträglichen Auswertung abgespeicherter Daten ermittelt werden, können eindeutig einem bestimmten Gegenstand zugeordnet werden, der dann als fehlerhaft beschichtet aussortiert und ggf. nachbearbeitet werden kann.

Besonders vorteilhaft ist, wenn die Siebmaschine unmittelbar unterhalb des Mischbehälters angeordnet ist und der Mischbehälter ein Austragrohr aufweist, über welches das Mischpulver nach Öffnen des Auslaßventils des Mischbehälters in freiem Fall in die Siebmaschine gelangt. Auf diese Weise gelingt die Beschickung der Siebmaschine besonders störungsfrei und schnell, so daß auch bei raschen Taktzeiten des Beschichtungsvorgangs die Befüllung der als Applikationsbehälter dienenden Siebmaschine zwischen zwei Beschichtungsvorgängen möglich ist. Außerdem wird bei dieser Siebmaschinenbeschickung im freien Falls keine Falschluft und keine zusätzliche Energie in die Siebmaschine eingetragen, was sonst erfahrungsgemäß zu Ablagerungen auf dem Siebmaterial führt.

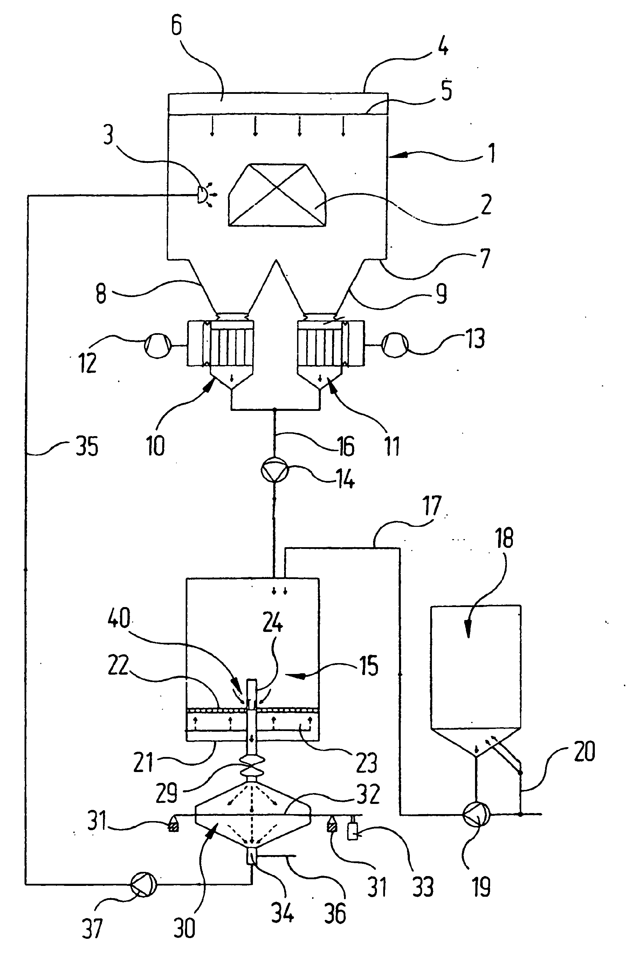

Ein Ausführungsbeispiel der Erfindung wird nachfolgend anhand der Zeichnung näher erläutert; die einzige Figur zeigt schematisch eine Anlage zur Pulverlackierung.

In der Zeichnung ist mit dem Bezugszeichen 1 das Gehäuse einer Pulverlackierkabine bezeichnet, in welches mit Pulverlack zu beschichtende Gegenstände 2 in bestimmten Taktzeiten aufeinanderfolgend eingebracht werden. Die Gegenstände 2 werden von einer Applikationseinrichtung 3 mit Lackpulver beaufschlagt und sodann im Takt wieder aus der Pulverlackierkabine 1 ausgebracht.

Zwischen der Oberseite 4 der Pulverlackierkabine 1 und einer abgehängten Filterdecke 5 ist ein Luftplenum 6 ausgebildet, das über eine in der Zeichnung nicht dargestellte Einlaßöffnung mit Zuluft gespeist wird. Aus dem Luftplenum 6 tritt Luft im Sinne der in der Zeichnung eingezeichneten Pfeile nach unten in den Innenraum der Pulverlackierkabine 1 ein. Diese Luft nimmt überschüssiges Pulver, welches sich nicht auf den Gegenständen 2 niedergeschlagen hat, zur Wiedergewinnung mit. Das Luft-/Pulvergemisch tritt hierzu in zwei im Boden 7 der Pulverlackierkabine 1 vorgesehene Absaugtrichter 8, 9 ein, über welche es zu zwei Filtereinheiten 10, 11 geführt wird. In diesen Filtereinheiten 10, 11 wird die Luft von dem Pulver getrennt, mit Hilfe von Gebläsen 12, 13 abgesaugt und entweder zur Rückführung in die Pulverlackierkabine 1 einer Aufbereitungseinrichtung oder der Außenatmosphäre zugeführt.

Das in den Filtereinheiten 10, 11 zurückbleibende Pulver wird über eine Leitung 16 mit Hilfe einer Pumpe 14 einem Mischbehälter 15 zugeführt. Über eine weitere Leitung 16 wird in den Mischbehälter 15 außerdem frisches Lackpulver eingebracht. Dieses wird aus einem Vorratsbehälter 18 mit Hilfe einer Pumpe 19 abgezogen. Das Frischpulver in dem Vorratsbehälter 18 wird mit Hilfe von Druckluft fluidisiert, welche über eine Leitung 20 in den Vorratsbehälter 18 einströmen kann. Druckluft wird auch der Pumpe 19 zugeführt, so daß in der Leitung 17 von der Pumpe 19 tatsächlich eine Luft-/Frischpulvermischung bewegt wird.

Der Mischbehälter 15 weist in einem gewissen Abstand oberhalb seines Bodens 21 einen Fluidisierungsboden 22 aus porösem Material auf. Zwischen dem Boden 21 des Mischbehälters 15 und dem Fluidisierungsboden 22 entsteht auf diese Weise ein Luftplenum 23, in welches über eine Leitung 24 Druckluft eingebracht wird. Die durch den Fluidisierungsboden 22 in den darüberliegenden Innenraum des Mischbehälters 15 eindringende Luft hält das dortige Gemisch aus Alt- und Frischpulver fluidisiert und damit strömungsfähig.

Der Boden 21 des Mischbehälters 15 wird ebenso wie der Fluidisierungsboden 22 von einem Austragrohr 24 durchstoßen. Knapp oberhalb des Fluidisierungsbodens 22 weist das Austragrohr 24 in seiner Mantelfläche ein in der Zeichnung nicht näher dargestelltes Austragventil 40 auf, über welches in geöffnetem Zustand das fluidisierte Pulver unter dem Einfluß der Schwerkraft in das Austragrohr 24 gelangen kann.

Das Austragrohr 24 führt auf kurzem Weg, in dem ein Kompensator 29 liegt, direkt zu einer Siebmaschine, die das Bezugszeichen 30 trägt. Die Siebmaschine 30 ruht insgesamt auf mehreren elekrischen Wägezellen 31, so daß mit Hilfe der Wägezellen 31 stets das Gewicht der Siebmaschine 30 mit Pulverinhalt ermittelt werden kann. Das Siebgewebe 32 der Siebmaschine 30 wird von einem Ultraschallgeber 33 beaufschlagt. Die Siebmaschine 30 steht insgesamt still, wird also insbesondere nicht in Schwingungen versetzt (sieht man von gegebenenfalls auf die gesamte Siebmaschine 30 übertragenen hochfrequenten Ultraschallschwingungen ab).

Am unteren Auslaßende der Siebmaschine 30 befindet sich ein steuerbares Auslaßventil 34, von dem eine Leitung 35 zu der Applikationseinrichtung 3 innerhalb der Pulverlakkierkabine 1 führt. In die Leitung 35 wird außerdem über eine Leitung 36 Druckluft eingegeben. Eine in der Leitung 35 liegende Pumpe 36 fördert daher ein Pulver-/Luftgemisch.

Die oben beschriebene Pulverlackieranlage arbeitet wie folgt:

Bevor die Beschichtung eines Gegenstands 2 in der Pulverlackierkabine 1 beginnt, wird zunächst das Austragventil 40 des Vorlagebehälters 15 bei geschlossenem Auslaßventil 34 der Siebmaschine 30 geöffnet. Unter Beobachtung des Gewichts der Siebmaschine 30, das ständig von den Wägezellen 31 ermittelt wird, wird eine Menge von Mischpulver aus dem Vorlagebehälter 15 im freien Fall durch das Austragrohr 24 in die Siebmaschine 30 eingebracht, die mindestens zur vollständigen Lackierung des gerade in der Pulverkabine 1 befindlichen Gegenstands 2 oder mehrerer solcher Gegenstände 2 ausreicht. Die Siebmaschine 30 übernimmt dabei die Funktion eines herkömmlichen Applikationsbehälters mit. Sodann wird das Austragventil 40 des Vorlagebehälters 15 wieder geschlossen und das in der Siebmaschine 30 befindliche Pulver wird gesiebt.

Nunmehr kann der Beschichtungsvorgang beginnen. Hierzu wird das Auslaßventil 34 der Siebmaschine 30 geöffnet und das gesiebte Mischpulver mit Hilfe der Pumpe 37 der Applikationseinrichtung 3 zugeführt. Die Gewichtsabnahme der Siebmaschine 30, die durch den Verlust an gesiebtem Mischpulver bedingt ist, wird ständig mit Hilfe der Wägezellen 31 überwacht. Die Daten werden in Echzeit abgespeichert.

Das von der Applikationseinrichtung 3 abgegebene Pulver schlägt sich zum Teil auf dem Gegenstand 2 nieder und wird zum Teil durch den in der Pulverlackierkabine 1 herrschenden Luftstrom mitgenommen und über die Absaugtrichter 8, 9 in die Filtereinheiten 10, 11 eingesaugt. Das dort abgeschiedene Pulver wird mit Hilfe der Pumpe 14 über die Leitung 16 wieder in den Mischbehälter 15 eingebracht, dem außerdem in einem entsprechenden Verhältnis über die Leitung 17 mit Hilfe der Pumpe 19 aus dem Vorratsbehälter 18 Frischpulver zugeführt wird.

Durch die ständige Beobachtung der Pulvermenge, die über die Applikationseinrichtung 3 auf die Gegenstände 2 in der Pulverlackierkabine 1 abgegeben wird und durch die Abspeicherung dieser in Echzeit gewonnenen Daten ist es jederzeit möglich zu kontrollieren, ob die einzelnen Gegenstände 2 mit einer ausreichenden Pulvermenge beaufschlagt worden sind. Abweichungen von den Sollwerten, die ggf. festgestellt werden, können unzweideutig einem bestimmten lackierten Gegenstand 2 zugeordnet werden. Bereits im Betrieb der Applikationseinrichtung 3 kann ein Alarm gegeben werden, wenn sich das Gesamtgewicht der Siebmaschine 30 nicht in der vorgeschriebenen Weise ändert, also nicht die erforderliche Pulvermenge pro Zeiteinheit aus dieser Siebmaschine 30 abgezogen wird. Auf diese Weise ist eine lückenlose Dokumentation des Lackiervorgangs bei aufeinanderfolgenden Gegenständen 2 und ggf. eine zweifelsfreie Identifizierung fehlerhaft lackierter Gegenstände 2 sowie eine Fehlerortung innerhalb der Lackieranlage möglich.

## Patentansprüche

1. Anlage zur Beschichtung von Gegenständen mit einem Pulver mit
a) einer Kabine (1), in der die Gegenstände (2) durch mindestens eine Applikationseinrichtung (3) mit Pulver beaufschlagbar sind;
b) einer Wiedergewinnungseinrichtung (8, 9, 10, 11) für das Überschußpulver, das bei der Beschichtung nicht an den Gegenständen (2) haften bleibt;
c) einem Vorratsbehälter (18) für frisches Pulver;
d) einem Mischbehälter (15), dem aus der Wiedergewinnungseinrichtung (8, 9, 10, 11) Überschußpulver und aus dem Vorratsbehälter (18) frisches Pulver zuführbar ist;
e) einer Siebmaschine (30), der über ein Austragventil (40) des Mischbehälters (15) Mischpulver zuführbar ist;
f) einem Applikationsbehälter, in dem gesiebtes Mischpulver zur Entnahme durch die Applikationseinrichtung (3) zwischenspeicherbar ist;
g) einer Wägeeinrichtung (31), welche das Gewicht des Applikationsbehälters mißt,
**dadurch gekennzeichnet, daß** die Siebmaschine (30)
h) in unmittelbarer Nähe des Mischbehälters (15) angeordnet ist;
i) gleichzeitig als Applikationsbehälter dient;
k) keinen niederfrequenten Schwingungen unterzogen wird;
l) mit einem steuerbaren Auslaßventil (34) versehen ist.

2. Anlage nach Anspruch 1, **dadurch gekennzeichnet, daß** die Siebmaschine (30) unmittelbar unterhalb des Mischbehälters (15) angeordnet ist und der Mischbehälter (15) ein Austragrohr (24) aufweist, über welches das Mischpulver nach Öffnen des Austragventils (40) des Mischbehälters (15) im freien Fall in die Siebmaschine (30) gelangt.

3. Anlage nach einem der Ansprüche 1 oder 2, **dadurch gekennzeichnet, daß** sie zum Pulverlackieren dient.

## Claims

1. Installation for coating objects with a powder, comprising:
a) a cabin (1) in which the objects (2) can be impinged upon by powder delivered by at least one application device (3);
b) a recovery arrangement (8, 9, 10, 11) for the excess powder which does not adhere to the objects (2) during the coating;
c) a reservoir (18) for fresh powder;
d) a mixing container (15) to which excess powder from the recovery arrangement (8, 9, 10, 11) and fresh powder from the reservoir (18) can be fed;
e) a sieving machine (30) to which mixed powder can be fed via an discharge valve (40) of the mixing container (15);
f) an application container in which sieved mixed powder can be stored temporarily for removal by the application device (3);
g) a weighing device (31) which measures the weight of the application container,
**characterised in that** the sieving machine (30)
h) is arranged in direct proximity to the mixing container (15),
i) serves at the same time as the application container,
k) is not subjected to low-frequency vibration, and
l) is provided with a controllable outlet valve (34) .

2. Installation according to Claim 1, **characterised in that** the sieving machine (30) is arranged directly below the mixing container (15) and the mixing container (15) has a discharge pipe (24) via which the mixed powder enters the sieving machine (30) in free fall after the discharge valve (40) of the mixing container (15) has been opened.

3. Installation according to either of Claims 1 and 2, **characterised in that** it is used for powder coating.

## Revendications

1. Installation pour enduire de poudre des objets, comprenant :
a) une cabine (1) dans laquelle les objets (2) peuvent être enduits de poudre par au moins un dispositif d'application (3) ;
b) un dispositif de récupération (8, 9, 10, 11) pour la poudre excédentaire qui n'adhère pas aux objets (2) lors de l'enduction ;
c) un réservoir (18) de poudre fraîche;
b) un récipient de mélange (15) pouvant être alimenté en poudre excédentaire provenant du dispositif de récupération (8, 9, 10, 11) et en poudre fraîche issue du réservoir (18);
e) une machine à tamiser (30) pouvant être alimentée en mélange de poudre par le biais d'une vanne d'évacuation (40) du récipient de mélange (15) ;
f) un récipient d'application dans lequel du mélange de poudre tamisé peut être temporairement stocké, avant d'en être retiré par le dispositif d'application (3);
g) un dispositif de pesage (31) qui mesure le poids du récipient d'application,
**caractérisée en ce que** la machine à tamiser (30)
h) est placée à proximité immédiate du récipient de mélange (15) ;
i) sert simultanément de récipient d'application ;
k) n'est pas soumise à des vibrations à basse fréquence ;
l) est dotée d'une vanne de sortie (34) pouvant être commandée.

2. Installation selon la revendication 1, **caractérisée en ce que** la machine à tamiser (30) est placée directement sous le récipient de mélange (15), et **en ce que** le récipient de mélange (15) présente un tuyau d'évacuation (24) duquel le mélange de poudre tombe librement dans la machine à tamiser (30) après ouverture de la vanne d'évacuation (40) du récipient de mélange (15).

3. Installation selon la revendication 1 ou 2, **caractérisée en ce qu'**elle sert à appliquer de la peinture en poudre.
